(19) Europäisches Patentamt
European Patent Office
Office européen des brevets

(11) **EP 2 895 571 B1**

(12) **EUROPÄISCHE PATENTSCHRIFT**

(45) Veröffentlichungstag und Bekanntmachung des Hinweises auf die Patenterteilung:
**15.11.2017 Patentblatt 2017/46**

(21) Anmeldenummer: **13759544.3**

(22) Anmeldetag: **11.09.2013**

(51) Int Cl.:
*C09J 151/06* (2006.01)    *C09J 123/12* (2006.01)
*C08K 5/00* (2006.01)    *C08L 57/02* (2006.01)

(86) Internationale Anmeldenummer:
**PCT/EP2013/068842**

(87) Internationale Veröffentlichungsnummer:
**WO 2014/041033 (20.03.2014 Gazette 2014/12)**

(54) **REAKTIVER POLYOLEFIN-SCHMELZKLEBSTOFF ZUR VERWENDUNG ALS REAKTIVIERBARE VORBESCHICHTUNG**

REACTIVE POLYOLEFIN HOT MELT ADHESIVE FOR USE AS REACTIVATABLE PRE-COATING

ADHÉSIF THERMOFUSIBLE À BASE DE POLYOLÉFINE RÉACTIVE DESTINÉE À L'UTILISATION COMME PRÉ-COUCHE RÉACTIVABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.09.2012 EP 12183958**

(43) Veröffentlichungstag der Anmeldung:
**22.07.2015 Patentblatt 2015/30**

(73) Patentinhaber: **Sika Technology AG**
**6340 Baar (CH)**

(72) Erfinder:
• **PASCHKOWSKI, Kai**
**21635 Jork (DE)**
• **JANKE, Doreen**
**25486 Alveslohe (DE)**

(74) Vertreter: **Sika Patent Attorneys**
**c/o Sika Technology AG**
**Corp. IP Dept.**
**Tüffenwies 16**
**Postfach**
**8048 Zürich (CH)**

(56) Entgegenhaltungen:
WO-A1-03/070851    WO-A1-2006/131417
WO-A1-2011/109605    WO-A2-2006/102957
DE-A1-102008 041 281

**Beschreibung**

**Stand der Technik**

Für das Kaschieren mit warmen Werkzeugen werden in der Praxis überwiegend Dispersions- oder Lösungsmittel-basierende Polyurethanklebstoffe verwendet. Diese Klebstoffsysteme weisen ein hohes Molekulargewicht auf und bieten nach dem Kaschieren eine hohe Anfangsfestigkeit, auch bei erhöhter Entformtemperatur. Reaktive Polyurethan-Schmelzklebstoffe weisen im Vergleich zu den dispergierten und gelösten Polyurethanklebstoffen ein deutlich geringeres Molekulargewicht auf und bieten dadurch nicht die Anfangsfestigkeit, speziell bei erhöhten Temperaturen. Diese Problematik wird nachfolgend als Problem der *"Anfangswärmefestigkeit"* bezeichnet.

Beim Kaschieren von unpolaren Substraten, wie Polypropylen oder Polyethylen, mit dispergierten oder gelösten Polyurethanklebstoffen, ist bei Polyurethan-basierenden Klebstoffen jedoch eine Vorbehandlung der Substrate notwendig, da diese auf Grund ihrer hohen Polarität nur unzureichend auf unpolaren Substraten haften. Für diese Anwendungen eignen sich demzufolge Polyolefin-Schmelzklebstoffe, auch Hotmelts genannt, besonders, da diese sehr unpolare Eigenschaften aufweisen und daher bei ihrer Verwendung, beispielsweise mit Polyolefinfolien, keine Vorbehandlung notwendig ist.

Eine spezielle Klasse für Kaschierzwecke vorteilhaft einsetzbarer reaktiver Schmelzklebstoffe basiert auf Polyolefinen, insbesondere auf silangepfropften Polyolefin-Präpolymeren, die durch Abmischung mit anderen Polymeren und Harzen zu Schmelzklebstoffen formuliert werden. Die Herstellung solcher silangepfropfter Polyolefin-Präpolymere ist beispielsweise in der US 5,994,474 oder in der DE 40 00 695 A1 beschrieben.

Bei den auf silangepfropften Poly-$\alpha$-olefin-basierenden Schmelzklebstoffen bindet der Klebstoff nach dem Auftragen nicht nur physikalisch (d.h. durch Abkühlen) ab, sondern es reagieren bei Feuchtigkeitszutritt auch die chemisch reaktiven Gruppen, beispielsweise im Polymer vorhandene Methoxysilangruppen, mit Wasser unter Bildung von Silanolen, die anschließend im Rahmen einer Kondensationsreaktion mit anderen Silanolgruppen zu kovalenten Bindungen zwischen einzelnen Polymermolekülen reagieren. So erhalten diese Klebstoffe ihre Endeigenschaften, insbesondere ihre hohe Wärmestandsfestigkeit und Beständigkeit gegenüber Umwelteinflüssen.

Für das Verkleben in dünnen Schichten nutzt man bei der Verwendung derartiger Schmelzklebstoffen in der Praxis häufig die Methode der Reaktivierung, d.h. der Klebstoff wird zunächst auf eine Substratseite gebracht, wo er schnell abbindet. Mittels erneuter Wärmezufuhr wird der Klebstoff anschließend reaktiviert und so in einen Zustand versetzt, in dem er in der Lage ist, das zweite Substrat ausreichend zu benetzen.

Typisch für die Verarbeitung von feuchtigkeitsreaktiven Schmelzklebstoffen ist es, dass diese zeitnah nach der Vorbeschichtung verarbeitet werden müssen. Dies kann nur gewährleistet werden, indem die Vernetzung des Klebstoffs nur bis zu einem gewissen Grad, d.h. nicht vollständig, abläuft, da sich ansonsten die Schmelzklebstoffe nicht mehr aktivieren lassen. Problematisch gestaltet es sich in der Praxis jedoch häufig, genau dieses vorgegebene Zeitfenster einzuhalten.

Auf silanfunktionalisierten Poly-$\alpha$-olefinen basierende Schmelzklebstoffzusammensetzungen sind bereits im Stand der Technik beschrieben worden. So offenbart beispielsweise die EP 2 075 297 A1 Schmelzklebstoffzusammensetzungen, die neben einem bei 25°C festen, thermoplastischen Polyolefin, das Silangruppen aufweist, ein Fettsäureamid enthält. Diese Schmelzklebstoffzusammensetzungen zeigen eine gute Haftung auf Polyolefinen und eignen sich damit als Kaschierklebstoffe für die Verarbeitung von Polyolefinfolien. Bei diesen Zusammensetzungen wurde festgestellt, dass sie sich trotz der guten Haftung auf Polyolefinen sehr gut von Teflon ablösen lassen und sich somit Vorteile in ihrem Herstellungs- und Applikationsprozess ergeben.

Die WO 2009/133093 betrifft Schmelzklebstoffzusammensetzungen, die mindestens ein thermoplastisches, bei 25°C festes silangepfropftes Poly-$\alpha$-olefin und mindestens ein Weichharz mit einem Schmelzpunkt oder Erweichungspunkt zwischen -10 und 40°C aufweisen. Diese Klebstoffe zeichnen sich durch eine verlängerte Offenzeit sowie einen schnellen Festigkeitsaufbau gegenüber konventionellen silanfunktionalisierten Poly-$\alpha$-olefin-Klebstoffen aus.

Die WO 2011/023768 beschreibt der WO 2009/133093 entsprechende Schmelzklebstoffzusammensetzungen, die zusätzlich ein polar modifiziertes Polyolefinwachs, insbesondere in Form von Maleinsäureanhydrid-gepfropftem Polypropylen enthalten. Diese Zusammensetzungen sind als vorteilhaft im Zusammenhang mit der Verklebung von Polyethylen- und Polypropylenfolien beschrieben.

Die WO 2011/109605 A1 offenbart eine Klebstoffzusammensetzung, die ein Silangruppen enthaltendes Poly-$\alpha$-Olefin-Polymer, eine thermoplastische Komponente mit einem Erweichungspunkt von mindestens 120°C, einen Katalysator und optional eine klebrigmachende Verbindung mit einem Erweichungspunkt von mindestens 80°C enthält. Die WO 2006/131417 A1 ist dagegen auf die Verwendung von Schmelzklebstoffen auf Basis von amorphen Poly-$\alpha$-Olefinen und/oder modifizierten, amorphen Poly-$\alpha$-Olefinen zur Rückfixierung von Kunstrasenrohware gerichtet. Die WO 2006/102957 A2 offenbart ein Verbindungsmittel in Form eines Klebstoffs zur Kaschierung einer Kunststofffolie auf ein Metallsubstrat. Die WO 03/070851 A1 beschreibt die Herstellung und Verwendung von Kleb- und Beschichtungsmaterialien auf Basis von Isocyanat- bzw. Silan-Funktionen in Form von reaktiven Einkomponentengranulaten. Die DE 10 2008 041 281 A1 beschreibt modifizierte Polyolefine mit hohem Erweichungspunkt und plastischer Verformbarkeit im unvernetzten Zustand auf Basis von teilkristallinen Polyolefinpolymeren, mit einem bestimmten Anteil an isotaktischen Poly(propylen)-Kettenelementen, wobei auf das Polymer bzw. die Polymere ein oder mehrere Silane aufgepfropft sind, sowie die Herstellung der Polyolefine und deren Verwendung in oder als Klebstoff. Die EP 0 827 994 A2 offenbart einen Klebstoff, der ein silangepfropftes, weitgehend amorphes Poly-$\alpha$-olefin, gekennzeichnet durch mindestens eine olefinische Doppelbindung und eine bis drei, direkt mit dem Silicium verbundene Alkoxygruppe enthält, sowie durch Wasser vernetzt ist.

Schließlich beschreibt die EP 2 336 261 A1 Schmelzklebstoffzusammensetzungen, die neben einem thermoplastischen, bei 25°C festen silangepfropften Poly-$\alpha$-olefin ein Reaktionsprodukt eines Polyisocyanats und eines isocyanatreaktiven Silans enthalten. Das isocyanatreaktive Silan soll dabei genau eine isocyanatreaktive Gruppe aufweisen, die aus Hydroxylgruppen, Mercaptogruppen oder Aminogruppen ausgewählt ist. Die in der EP 2 336 261 A1 genannten Schmelzklebstoffe sind als gut haftend sowohl auf polaren als auch auf apolaren Substraten beschrieben und weisen in dünnen Schichten eine verlängerte Offenzeit auf. Dennoch sollen sie relativ schnell eine hinlängliche Frühfestigkeit aufbauen und ihre gute Haftung auch bei Lagerung unter warmen und feuchten Bedingungen über längere Zeit beibehalten.

Diese Schmelzklebstoffe ermöglichen in der Regel eine hohe Festigkeit bei großer Wärmestabilität und verfügen ebenfalls über eine sehr hohe Anfangsfestigkeit. Problematisch bei diesen Schmelzklebstoffen ist jedoch ihre sehr kurze Offenzeit, was ihrer Verwendung als Kaschierklebstoffe ohne zwischenzeitliche Reaktivierung (d.h. Wiederaufschmelzung) entgegensteht.

Grundsätzlich sind solche Polyolefin-Hotmelts für die Verklebung in dünnen Schichten geeignet, problematisch ist es jedoch, dass sie direkt nach dem Auftragen eine geringe Anfangswärmebeständigkeit aufweisen. Dies macht diese Klebstoffe insbesondere für die Kaschierung von dreidimensional verformten Bauteilen mit warmen Werkzeugen ungeeignet. Zudem besteht bei der Verwendung solcher Klebstoffe häufig ein Problem darin, dass diese eine nur kurze Reaktivierungszeit aufweisen. Mit Reaktivierungszeit ist die Zeitspanne zwischen Klebstoffauftrag und Verklebung gemeint.

Die vorbeschriebenen Schmelzklebstoffe weisen zudem den Nachteil auf, dass sie während des Aushärtens so stark vernetzen, dass sie durch eine erneute Hitzebehandlung nicht mehr aufgeschmolzen werden können. Damit handelt es sich bei den beschriebenen Schmelzklebstoffen nicht um Schmelzklebstoffe im klassischen Sinne, sondern um reaktive Schmelzklebstoffe, die ähnlich wie entsprechende reaktive Schmelzklebstoffe auf Polyurethanbasis nur einmalig appliziert, danach jedoch nicht mehr weiterverarbeitet werden können.

Als Alternative für reaktive Schmelzklebstoffe werden im Stand der Technik häufig physikalisch schnell abbindende Schmelzklebstoffe eingesetzt. Diese werden zunächst auf ein Trägermaterial (wie beispielsweise eine Folie oder ein Textil) aufgetragen. Dadurch, dass der Schmelzklebstoff schnell abbindet, lassen sich die vorbeschichteten Materialien stapeln oder aufrollen. Zur eigentlichen Verklebung ist anschließend eine Klebstoffaktivierung mittels Zufuhr von Wärme notwendig.

Nach der Verflüssigung bzw. Erweichung der Schmelzklebstoffe können zu verklebenden Teile zusammengebracht werden. Der resultierende Verbundkörper muss anschließend eine Zeit lang im Werkzeug unter Anlegen von Druck abkühlen, so dass die Klebstoffe eine gewisse Festigkeit aufbauen können. Danach kann der Druck entfernt und der Verbundkörper aus dem Verarbeitungswerkzeug entnommen werden.

Nachteilig bei konventionellen Schmelzklebstoffen ist jedoch ihre geringe Festigkeit in der Wärme. Dies hat zur Folge, dass in der Praxis die Werkzeuge gekühlt werden müssen und eine lange Presszeit erforderlich ist, um eine ausreichende Anfangsfestigkeit aufzubauen. Eine Kaschierung, d.h. ein Verkleben von großflächigen Substraten in dünnen Schichten, mit warmen Werkzeugen ist in der Praxis sehr viel effizienter als eine Kaschierung, bei der erst mit Wärme aktiviert wird, dann jedoch der Klebstoff wieder abgekühlt werden muss. Für eine Kaschierung mit warmen Werkzeugen ist es jedoch erforderlich, dass der Klebstoff auch bei erhöhter Temperatur nicht zu klebrig wird, und dadurch eine hohe Festigkeit aufweist.

Beide Ansätze haben je nach Verwendungszweck Vorteile, es besteht jedoch ein Bedarf an Schmelzklebstoffen, insbesondere auf Basis von Poly-$\alpha$-olefinen, die die Vorteile beider Ansätze verbinden.

## Darstellung der Erfindung

Für Anwendungen, in denen insbesondere ein erneutes Aufschmelzen eines Schmelzklebstoffs erforderlich ist, besteht daher ein Bedarf, eine wirksame Schmelzklebstoffzusammensetzung zur Verfügung zu stellen, welche die Nachteile des Standes der Technik überwindet und insbesondere auf olefinischer Basis beruht und damit eine lange Reaktivierungszeit und eine hohe Anfangswärmebeständigkeit aufweist. Eine weitere Aufgabe der Erfindung besteht darin, einen Klebstoff bereitzustellen, der eine sehr hohe Anfangsfestigkeit auch in der Wärme aufweist, jedoch sehr lange reaktivierbar ist, d.h. unter Einfluss von Wärme und Druck erneut in einen formbaren Zustand versetzt werden kann.

Diese Probleme werden überraschenderweise durch eine Schmelzklebstoffzusammensetzung nach Anspruch 1 gelöst.

In der verwendeten Klebstoffzusammensetzung wird der Vernetzungsgrad, der im Wesentlichen auf das mindestens eine thermoplastische, bei 25°C feste Silangruppen enthaltende Poly-$\alpha$-olefin zurückgeht, bewusst gering gehalten, so dass sich nur eine geringe Anzahl von Verknüpfungen ausbilden kann. Dadurch lässt sich nach der chemischen Vernetzung eine hohe Anfangswärmebeständigkeit erzielen, was die unübliche Verwendung erfindungsgemäßer Schmelzklebstoffe beim Warmkaschieren ermöglicht.

Weitere Aspekte der vorliegenden Erfindung sind die Verwendung der erfindungsgemäßen Schmelzklebstoffzusammensetzung zum Verkleben von Folien oder Fasermaterialien zur Anwendung insbesondere im Automobilbereich und zur Herstellung von Sandwichelementen, insbesondere für den Bau- und Karavanbereich. Ein weiterer Aspekt der vorliegenden Erfindung ist ein Verbundkörper, umfassend ein erstes Substrat, ein zweites Substrat sowie eine dazwischen aufgebrachte Schicht einer erfindungsgemäßen Schmelzklebstoffzusammensetzung sowie ein Verfahren zur Herstellung eines solchen Verbundkörpers.

## Wege zur Ausführung der Erfindung

In einem ersten Aspekt betrifft die vorliegende Erfindung eine Schmelzklebstoffzusammensetzung, umfassend

(a) 40 bis 65 Gew.-% an mindestens einem thermoplastischen, bei 25 °C festen Silangruppen enthaltenden Poly-$\alpha$-olefin,
(b) mindestens ein bei 25°C festes thermoplastisches Poly-$\alpha$-olefin ohne Silangruppen und
(c) mindestens ein bei 25°C klebrigmachendes Harz mit einen Schmelz- oder Erweichungspunkt, bestimmt mit der Ring & Kugel Methode, von 60 bis 100°C,

wobei das Produkt des Gehalts der Komponente (a), bezogen auf das Gesamtgewicht der Schmelzklebstoffzusammensetzung, und ihres Pfropfungsgrads $\leq 0,025$ ist, wobei der Pfropfungsgrad bestimmt wird als Pfropfungsgrad = Menge Pfropfauflage/Menge Pfropfgrundlage.

Wenn im Vorstehenden von dem Gehalt der Komponente (a), bezogen auf das Gewicht, die Rede ist, ist damit das Gewicht der Komponente (a), bezogen auf die gesamte Schmelzklebstoffzusammensetzung, gemeint. Wenn beispielsweise diese mit einem Gehalt an 50 Gew.-%, bezogen auf die gesamte Schmelzklebstoffzusammensetzung, in dieser enthalten ist, ergibt sich als Gehalt der Komponente (a), bezogen auf das Gewicht, ein Wert von 0,5.

Der Pfropfungsgrad wird wie folgt ermittelt:

$$\text{Pfropfungsgrad (\%)} = \frac{\text{Menge Pfropfauflage}}{\text{Menge Pfropfgrundlage}} \times 100$$

Die Pfropfauflage bezeichnet dabei die Seitenketten, während die Pfropfgrundlage die Hauptkette ist.

Beim Pfropfungsgrad handelt es sich ebenfalls regelmäßig um eine Prozentangabe, die nicht als solche, sondern entsprechend ihrem tatsächlichen Wert in die Kalkulation eingeht. Weist die Komponente (a) beispielsweise einen Pfropfungsgrad von 10% auf, so ergibt sich für die Berechnung ein Faktor von 0,1.

Vorzugsweise handelt es sich bei dem thermoplastischen, bei 25°C festen Silangruppen enthaltenden Poly-$\alpha$-olefin um ein silangepfropftes Poly-$\alpha$-olefin. Besonders bevorzugt weist das Silangruppen enthaltende Poly-$\alpha$-olefin eine Erweichungstemperatur von 70°C bis 150°C, insbesondere von 80°C und 120°C, und besonders bevorzugt von 90°C und 110°C, auf. Die Erweichungstemperatur wird hierbei mit der Ring & Kugel-Methode in Anlehnung an die DIN EN 1238 (mit Datum vom 2011/07) gemessen.

Derartige Silangruppen enthaltende Poly-$\alpha$-olefine sind dem Fachmann geläufig. Sie lassen sich beispielsweise durch Aufpfropfung von ungesättigtem Silan, wie Vinyltrimethoxysilan, auf ein Poly-$\alpha$-olefin herstellen. Eine detaillierte Beschreibung der Herstellung von silangepfropften Poly-$\alpha$-olefinen findet sich beispielsweise in der US 5,994,474 und der DE 40 00 695 A1.

Ein besonders geeignetes bei 25°C feste Silangruppen enthaltendes Poly-$\alpha$-olefin ist ein silangepfropftes Polyethylen oder Polypropylen.

Weitere bevorzugte Silangruppen enthaltende Poly-$\alpha$-olefine sind silangepfropfte Poly-$\alpha$-olefine, welche mit Hilfe des Ziegler-Natta-Verfahrens hergestellte Poly-$\alpha$-olefine sind, auf welche Silangruppen aufgepfropft wurden. Insbesondere handelt es sich um silangepfropfte Polyethylen-Homopolymere oder Polypropylen-Homopolymere.

Der Pfropfungsgrad des silangepfropften Poly-$\alpha$-olefins beträgt vorteilhafterweise mehr als 0,5 Gew.-%, insbesondere mehr als 1,5 Gew.-%, bezogen auf das Gewicht des Polyolefins. Wird als silangepfropftes Poly-$\alpha$-olefin ein nach dem Ziegler-Natta-Verfahren hergestelltes silangepfropftes Poly-$\alpha$-olefin verwendet, so liegt der Pfropfungsgrad vorzugsweise zwischen 1 und 8 Gew.-%, insbesondere zwischen 1,5 und 5 Gew.-%.

Hinsichtlich des Gewichtsanteils unterliegt das mindestens eine thermoplastische, bei 25°C feste Silangruppen enthaltende Poly-α-olefin keinen relevanten Beschränkungen, mit der Maßgabe, dass das Produkt des Gehalts der Komponente (a), bezogen auf ihr Gewicht, und ihres Pfropfungsgrads ≤ 0,025 sein muss. In einer bevorzugten Ausführungsform beträgt jedoch der Anteil aller Silangruppen enthaltenden Poly-α-olefine in der Schmelzklebstoffzusammensetzung mehr als 40 Gew.-%, bevorzugt liegt er zwischen 50 und 65 Gew.-%, und insbesondere zwischen 50 und 60 Gew.-%. Ist der Anteil geringer als 40%, so führt dies zu einer signifikant reduzierten Anfangswärmebeständigkeit und einer ebenfalls geringen finalen Wärmefestigkeit. Ist der Gehalt der Silangruppen enthaltenden Poly-α-olefine hingegen größer als 65%, so kann durch Wiederaufschmelzen des ausgehärteten Klebstoffs nur noch eine Viskosität erreicht werden, bei der eine ausreichende Benetzung des zu verklebenden Substrats nur schwer gewährleistet werden kann.

Wie dies vorstehend bereits ausgeführt wurde, ist für die Fähigkeit eines Aufschmelzens nach der Vernetzung ein geringer Vernetzungsgrad notwendig, der in den Zusammensetzungen gemäß der vorliegenden Erfindung durch das Produkt des Gehaltes der Komponente (a), bezogen auf das Gesamtgewicht der Schmelzklebstoffzusammensetzung, und ihres Pfropfungsgrades ausgedrückt wird, der ≤ 0,025 sein muss. Die durch diesen Parameter bestimmte geringe Vernetzungsdichte des aus der vorstehend beschriebenen Schmelzklebstoffzusammensetzung erhältlichen Produkts garantiert, dass der Schmelzklebstoff unter Zuführung von Wärme und Druck erneut verflüssigt oder erweicht werden kann und so verarbeitbar ist.

Es hat sich als vorteilhaft herausgestellt, wenn das Produkt des Gehalts der Komponente (a), bezogen auf das Gewicht, und ihres Pfropfungsgrades ≤ 0,02 ist. Andererseits ist es erforderlich, dass die Schmelzklebstoffzusammensetzung gemäß der vorliegenden Erfindung ein Mindestmaß an Vernetzung aufweist, damit sie eine vorteilhafte Anfangsfestigkeit und eine entsprechende Wärmestanzfestigkeit aufweisen kann. Dabei hat es sich als vorteilhaft herausgestellt, wenn das Produkt des Gehalts der Komponente (a), bezogen auf das Gewicht, und ihres Pfropfungsgrades ≥ 0,005, und insbesondere ≥ 0,01 ist.

Als in den Schmelzklebstoff einzubeziehende Komponente (b) enthält die Schmelzklebstoffzusammensetzung weiterhin mindestens ein bei 25°C festes thermoplastisches Poly-α-olefin ohne Silangruppen. Bei diesem Polymer kann es sich um ein Homo- oder Copolymer von ungesättigten Monomeren, insbesondere ausgewählt aus der Gruppe, umfassend Ethylen, Propylen, Butylen, Isobutylen, Isopren, Vinylacetat bzw. Vinylester mit C3 bis C12-Carbonsäuren und (Meth)acrylat, handeln. (Meth)acrylat bezeichnet im Zusammenhang mit der hier offenbarten Erfindung sowohl Methacrylate als auch Acrylate. Besonders bevorzugt sind Ethylenvinylacetat, ataktische Poly-α-olefine, Polypropylen und Polyethylen. Ganz besonders bevorzugt sind ataktische Poly-α-olefine.

Bevorzugt weisen die festen thermoplastischen Polymere einen Erweichungspunkt von über 90°C, insbesondere von etwa 120 bis 180°C, auf. Ein besonders bevorzugtes bei 25°C festes thermoplastisches Polymer ist ein propenreiches amorphes Poly-α-olefin.

Das Molekulargewicht $M_n$ der thermoplastischen Polymere ohne Silangruppen liegt vorzugsweise im Bereich von etwa 7000 bis 250000 g/mol.

Bevorzugt liegt das Gewichtsverhältnis von festen Silangruppen enthaltenden Poly-α-olefinen zu den festen thermoplastischen Poly-α-olefinen ohne Silangruppen im Bereich von etwa 1:1 bis 20:1. Besonders bevorzugt beträgt das Gewichtsverhältnis 2,5 oder weniger : 1, insbesondere 2,2 oder weniger : 1.

Als besonders vorteilhaft hat sich ein Anteil an festem thermoplastischem Polymer ohne Silangruppen von etwa 5 bis 40 Gew.-%, insbesondere von etwa 20 bis 30 Gew.-%, bezogen auf das Gesamtgewicht der Schmelzklebstoffzusammensetzung, erwiesen.

Die erfindungsgemäße Schmelzklebstoffzusammensetzung enthält weiterhin mindestens ein bei 25°C klebrigmachendes Harz, das vorzugsweise einen Schmelz- oder Erweichungspunkt im Bereich von 60 bis 100°C, insbesondere zwischen 80 und 100°C, aufweist. Dieser wurde mit der Ring-Kugel-Methode in Anlehnung an die DIN EN 4625 (2006/04) gemessen. Das Harz kann ein natürliches oder ein synthetisches Harz sein.

Insbesondere sind derartige Harze mittel- bis höhermolekulare Verbindungen aus den Klassen der Kohlenwasserstoffharze, Polyolefine, Polyester, Polyether, Poly(meth)acrylate oder Aminoharze.

In einer bevorzugten Ausführungsform ist das Harz ein Kohlenwasserstoffharz, insbesondere ein aliphatisches $C_5$-$C_9$-Kohlenwasserstoffharz oder ein aromatisch modifiziertes $C_5$-$C_9$-Kohlenwasserstoffharz.

Besonders geeignet als Harz hat sich ein aliphatisches $C_5$-Kohlenwasserstoffharz gezeigt, welches unter dem Handelsnamen Wingtack® 10 oder Wingtack® 86 von der Firma Cray Valley kommerziell vertrieben wird.

Weitere geeignete Harze sind beispielsweise Polyterpenharze, wie sie beispielsweise als Silvares® TR A25 von Arizona Chemical, USA, kommerziell vertrieben werden, Rosinester oder/und Tallharzester, wie sie beispielsweise als Silvatac® RE12, Silvatac® RE10, Silvatac® R15, Silvatac® RE20, Silvatac® RE25 oder Silvatac® RE40 von Arizona Chemical, USA, kommerziell vertrieben werden.

Weitere geeignete Harze sind beispielsweise Escorez™ 5040 (Exxon Mobile Chemical). Als Harze geeignete Kohlenwasserstoffharze sind beispielsweise Picco A10 (Eastman Kodak) und Regalite R1010 (Eastman Kodak).

Der Anteil aller Harze beträgt typischerweise 1 bis 20 Gew.-%, insbesondere 5 bis 15 Gew.-%, bezogen auf die Schmelzklebstoffzusammensetzung.

Darüber hinaus hat es sich als besonders zweckmäßig herausgestellt, wenn das Gewichtsverhältnis der Harzkomponente zu der Komponente aus Silangruppen enthaltenden Poly-$\alpha$-olefinen kleiner als 0,5 ist. Bevorzugt liegt das Gewichtsverhältnis im Bereich von etwa 0,1 bis 0,35 und besonders bevorzugt im Bereich von 0,12 bis 0,2.

Die erfindungsgemäße Schmelzklebstoffzusammensetzung enthält weiterhin vorzugsweise mindestens einen Katalysator, welcher die Reaktion von Silangruppen und die damit einhergehende Vernetzung der Schmelzklebstoffzusammensetzung beschleunigt. Im Rahmen der Erfindung hat es sich als zweckmäßig herausgestellt, wenn als Katalysator ein Phosphorsäureester oder eine zinnorganische Verbindung, insbesondere Dibutylzinnlaurat (DBTL), eingesetzt wird. Zweckmäßig einzusetzende Phosphorsäureester sind beispielsweise gemischte Phosphorsäure-Mono-, -Di-, und -Triester, welche auf die Reaktion von Phosphorpentoxid mit Alkoholen zurückgehen. Bei den Alkoholen ist es zweckmäßig, wenn diese eine mittlere Kettenlänge im Bereich von 12 bis 24, insbesondere im Bereich von 16 bis 20, aufweisen, da entsprechende Phosphorsäureester eine verminderte Acidität im Vergleich zu Phosphorsäure aufweisen und somit ihre Reaktivität gegenüber Zersetzungsreaktionen der Silane herabgesetzt ist. Ein kommerziell erhältlicher Phosphorsäureesterkatalysator ist beispielsweise das Hordphos MDST.

Der Katalysator ist zweckmäßig in einer Menge von mehr als 0,05 Gew.-%, nicht jedoch mehr als 5 Gew.-%, insbesondere in einer Menge im Bereich von etwa 0,5 bis 2 Gew.-%, in die Schmelzklebstoffzusammensetzung einzubeziehen.

Darüber hinaus können in der erfindungsgemäßen Schmelzklebstoffzusammensetzung weitere Hilfs- und Zusatzstoffe, insbesondere solche, die ausgewählt sind aus der Gruppe, umfassend Füllstoffe, Weichmacher, Haftvermittler, UV-Absorptionsmittel, UV- und Wärmestabilisatoren, optische Aufheller, Pigmente, Farbstoffe und Trocknungsmittel, enthalten sein.

Als besonders vorteilhaft haben sich Schmelzklebstoffzusammensetzungen erwiesen, welche im Wesentlichen aus einem thermoplastischen, bei 25°C festen Silangruppen enthaltenden Poly-$\alpha$-olefin, mindestens einem bei 25°C festen thermoplastischen Poly-$\alpha$-olefin ohne Silangruppen, einem klebrigmachenden Harz, sowie gegebenenfalls einem Harz einem Katalysator, gegebenenfalls einem UV-Stabilisator und gegebenenfalls einem optischen Aufheller bestehen.

Eine besonders vorteilhafte Ausführungsform der vorliegenden Erfindung besteht aus einer Zusammensetzung, umfassend 50 bis 65 Gew.-% eines thermoplastischen, bei 25°C festen Silangruppen enthaltenden Poly-$\alpha$-olefins, 25 bis 35 Gew.-% eines festen thermoplastischen Poly-$\alpha$-olefins ohne Silangruppen, 5 bis 15% eines bei 25°C klebrigmachenden Harzes, 0,1 bis 0,3 Gew.-% eines Katalysators sowie 0,1 bis 1 Gew.-% eines UV-Stabilisators und 0,001 bis 0,05 Gew.-% eines optischen Aufhellers.

Grundsätzlich erfolgt die Herstellung auf übliche, dem Fachmann für Schmelzklebstoffe bekannte Art und Weise.

Die erfindungsgemäßen Schmelzklebstoffzusammensetzungen werden verflüssigt, indem die thermoplastischen Inhaltsstoffe aufgeschmolzen werden. Dabei sollte die Viskosität der Schmelzklebstoffzusammensetzungen der Applikationstemperatur angepasst sein. Typischerweise liegt die Applikationstemperatur, bei der der Klebstoff in einer gut verarbeitbaren Form vorliegt im Bereich von 90 bis 200°C. Die Viskosität beträgt in diesem Temperaturbereich etwa 1500 bis 50000 mPas. Ist die Viskosität wesentlich höher, dann ist die Applikation schwierig, während wenn die Viskosität wesentlich niedriger als 1500 mPas ist, der Klebstoff so dünnflüssig ist, dass er beim Auftragen von der zu verklebenden Werkstoffoberfläche abläuft, bevor er sich aufgrund des Abkühlens verfestigt.

Ein besonderer Vorteil der erfindungsgemäßen Schmelzklebstoffzusammensetzung besteht darin, dass sie einen nur geringen Vernetzungsgrad selbst nach der Aushärtung aufweist, so dass sich der ausgehärtete reaktive Polyolefinschmelz-klebstoff mittels Wärme reaktivieren lässt. Dabei wird der ausgehärtete Klebstoff bei Zufuhr von Wärme so weich, dass dieser mit Hilfe von Druck zum Ausfließen gebracht werden kann.

Der erfindungsgemäße Schmelzklebstoff ist dabei weiterhin lagerstabil und unter den üblichen Applikationsbedingungen, insbesondere im Temperaturbereich von 100 bis 200°C, gut verarbeitbar und während ausreichend langer Zeit viskositätsstabil. Dies gewährleistet auch eine Applikation über offene Walzen. Zusätzlich härtet der Schmelzklebstoff mit Feuchtigkeit ohne Geruchsbildung rasch und vollständig aus und bildet dabei selbst bei dickschichtiger Applikation keine Blasen. Nach der Aushärtung verfügt er über eine relativ hohe Endfestigkeit und Wärmestandsfestigkeit sowie eine gute Beständigkeit gegenüber Umwelteinflüssen. Insbesondere weist der ausgehärtete Klebstoff eine sehr lange *"Reaktivierungszeit"*, d.h. eine Zeit, in der er erneut aufgeschmolzen und bearbeitet werden kann, auf, während er gleichzeitig eine sehr hohe Anfangswärmebeständigkeit gewährleistet.

Ein weiterer Aspekt der Erfindung betrifft einen Verbundkörper, umfassend

- ein erstes Substrat (S1), welches Glas, Kunststoff, Holz, eine Folie, einen Schaumstoff oder ein Textil, insbesondere einen Kunststoff, umfasst,
- eine Schmelzklebstoffzusammensetzung wie vorstehend beschrieben oder eine entsprechende vernetzte Schmelzklebstoffzusammensetzung sowie
- ein zweites Substrat (S2),

wobei die Schmelzklebstoffzusammensetzung oder die vernetzte Schmelzklebstoffzusammensetzung zwischen dem ersten Substrat (S1) und dem zweiten Substrat (S2) angeordnet ist.

Das zweite Substrat (S2), vielfach auch als Träger bezeichnet, kann von verschiedener Art und Natur sein. Die Substrate können beispielsweise aus Kunststoff, insbesondere Polyolefin oder ABS, Metall, lackiertem Metall, Holz, Holzwerkstoffen, Glas oder Fasermaterialien sein. Das Substrat ist vorzugsweise ein fester, geformter Körper.

Insbesondere handelt es sich beim zweiten Substrat (S2) um ein Fasermaterial, insbesondere ein Naturfasermaterial. Alternativ dazu ist es bevorzugt, wenn das zweite Substrat (S2) ein Kunststoff, insbesondere ein Polypropylen ist.

Ein weiterer Aspekt der vorliegenden Erfindung ist ein Verfahren zur Herstellung eines Verbundwerkstoffs, wie er vorstehend beschrieben wurde. Dieses Verfahren umfasst die Schritte

(i) Aufschmelzen der erfindungsgemäßen Schmelzklebstoffzusammensetzung wie vorstehend beschrieben,
(ii) Applizieren der geschmolzenen Schmelzklebstoffzusammensetzung auf ein erstes Substrat (S1), welches Glas, Kunststoff, Holz, eine Folie, ein Schaumstoff oder ein Textil, bevorzugt ein Kunststoff, umfasst,
(iii) gegebenenfalls Erwärmen des ersten Substrats (S1), und
(iv) Kontaktieren des zweiten Substrats (S2) mit der aufgeschmolzenen Schmelzklebstoffzusammensetzung.

Durch das Erhitzen der Folie (S1) wird diese weich und kann sich der Geometrie des Trägers anpassen, ohne dass Falten entstehen.

Bei den hier benutzten Folien, insbesondere bei Verwendung von Polyolefin-Folien, kann es sich um Dekorfolien handeln, die eine Oberflächenstruktur aufweisen. Diese Oberflächenstruktur kann beispielsweise vor oder während oder nach dem Verkleben eingeprägt werden.

Besonders vorteilhaft hierbei ist es, dass die Klebstoffzusammensetzung direkt auf die Folie appliziert werden kann und nicht zuvor ein Primer auf diese aufgetragen werden muss, wie dies zum Beispiel bei Polyurethandispersionsklebstoffen der Fall ist.

Im Folgenden wird die Erfindung durch Beispiele näher illustriert.

**Beispiele**

Eine Schmelzklebstoffgrundrezeptur, enthaltend 28,5 Gewichtsteile eines bei 25°C festen thermoplastischen Polyalphaolefins ohne Silangruppen, 9,7 Gewichtsteile eines bei Raumtemperatur klebrig machenden Harzes sowie 0,15 Gewichtsteile eines die Reaktion von Silangruppen beschleunigenden Katalysators, und 0,5 Gewichtsteile eines Antioxidationsmittels wurde durch Vermischen der jeweiligen Komponenten hergestellt. Diese Mischung wurde im Gewichtsverhältnis 10:90 bis 90:10 mit einem thermoplastischen, bei 25°C festen, Silangruppen enthaltenden Polyalphaolefin (Silan PAO, Vestoplast 206 V) gemischt. Die in der folgenden Tabelle 1 zusätzlich enthaltenen Proben 1 und 10 bestanden zu 100% aus der Vormischung bzw. aus dem thermoplastischen, bei 25°C festen, Silangruppen enthaltenden Polyalphaolefin.

Als themoplastisches Polyalphaolefin wurde ein Propylen-reiches amorphes Polyalphaolefin mit einer Schmelzviskosität bei 190°C von 25.000 ± 7.000 mPas sowie einer Erweichungstemperatur von 161°C eingesetzt. Das thermoplastische, bei 25°C feste, Silangruppen enthaltende Polyalphaolefin wies, bezogen auf die Silangruppen, einen Pfropfungsgrad von etwa 3% auf.

Die jeweiligen Proben wurden anschließend auf ihre Verklebungseigenschaften untersucht. Dazu wurden Probenkörper wie folgt hergestellt:

Der jeweilige Klebstoff wurde als 100 μm Klebstofffilm auf eine TPO-Folie bzw. ein Textil aufgebracht. Die vorbeschichteten Textilien wurden anschließend ca. 1 Tag vor ihrer weiteren Verwendung liegen gelassen, um ein Abreagieren der Silangruppen zu gewährleisten. Anschließend wurde der Klebstofffilm durch Erhitzen reaktiviert und mit dem zweiten Substrat in Kontakt gebracht. Nach erneutem Abkühlen des Verbundstoffs wurde die Rollschälfestigkeit bestimmt. Die erhaltenen Messwerte sind in Tabelle 1 dargestellt.

In den Versuchen zeigt sich, dass mit zunehmendem Anteil des thermoplastischen, bei 25°C festen, Silangruppen enthaltenden Polyalphaolefins ein Wiederaufschmelzen des Klebstoffes nach dem Abreagieren der Silangruppen nur noch schwer möglich ist. Die in Tabelle 1 wiedergegebenen Messwerte zeigen, dass mit einem Gehalt von etwa 60% des Silangruppen enthaltenden Polyalphaolefins im Durchschnitt die besten Ergebnisse erzielt wurden. Zwar wurden bei Klebstoffen mit 80 bis 100% an thermoplastischem, bei 25°C festen, Silangruppen enthaltenden Polyalphaolefin teilweise noch gegenüber 60% der Komponente verbesserte Rollschälfestigkeiten aufgefunden, bei diesen Zusammensetzungen war jedoch eine Wiederaufschmelzbarkeit der Klebstoffe nur in begrenztem Umfang gegeben.

Tabelle 1

| Klebstoff | PP-TPO | ABS-TPO | ABS + Corona-TPO | PP-Dekortextil | ABS-Dekortextil | ABS+Corona-Dekortextil | Polystyrolträger-Dekortextil | Produkt des Gehalts des Silan-Gruppen enthaltenden Poly-$\alpha$-Olefins, bezogen auf das Gesamtgewicht der Schmelzklebstoffzusammensetzung und ihres Pfropfungsgrads |
|---|---|---|---|---|---|---|---|---|
| 100% Vormischung | 8,8 N/cm | - | - | 0,8 N/cm | 3,1 N/cm | - | 1,5 N/cm | 0,0 |
| 90% Vormischung + 10% Silan PAO | 11,8 N/cm | - | - | 1,5 N/cm | 1,0 N/cm | - | 1,5 N/cm | 0,003 |
| 80% Vormischung + 20% Silan PAO | 9,8 N/cm | - | - | 2,2 N/cm | 2,0 N/cm | - | 1,4 N/cm | 0,006 |
| 70% Vormischung + 30% Silan PAO | 20,8 N/cm | - | - | 6,2 N/cm | 1,7 N/cm | - | 1,4 N/cm | 0,009 |
| 60% Vormischung + 40% Silan PAO | 9,1 N/cm | - | - | 2,9 N/cm | 3,0 N/cm | - | 1,4 N/cm | 0,012 |
| 50% Vormischung + 50% Silan PAO | 10,1 N/cm | - | - | 4,6 N/cm | 3,0 N/cm | - | 1,3 N/cm | 0,015 |
| 40% Vormischung + 60% Silan PAO | 15,5 N/cm | 2,0 N/cm | 4,0 N/cm | 6,5 N/cm | 3,7 N/cm | 3,9 N/cm | 1,3 N/cm | 0,018 |
| 30% Vormischung + 70% Silan PAO | 7,9 N/cm | - | - | 1,1 N/cm | 0,7 N/cm | - | 1,6 N/cm | 0,021 |
| 20% Vormischung + 80% Silan PAO | 7,8 N/cm | - | - | 11,9 N/cm | 2,0 N/cm | - | 1,3 N/cm | 0,024 |
| 10% Vormischung + 90% Silan PAO | 17,1 N/cm | - | - | 17,2 N/cm | 1,5 N/cm | - | 2,0 N/cm | 0,027 |
| 100% Silan PAO | 20,1 N/cm | - | - | 21,8 N/cm | 1,4 N/cm | - | 1,6 N/cm | 0,03 |

Ferner wurden Schmelzklebstoffgrundrezepturen, wie vorstehend beschrieben, hergestellt, wobei unterschiedliche klebrigmachende Harze eingesetzt wurden, nämlich Wingtack 95 mit einer Erweichungstemperatur von 95°C und Escorez 1401 mit einer Erweichungstemperatur von 115- 123°C.

Die Grundrezeptur wurde anschließend im Verhältnis 4:6 mit dem Silangruppen enthaltenden Poly-α-Olefin (Vestoplast 206 V) gemischt. Von diesen Schmelzklebstoffzusammensetzungen wurden die offene Zeit (Zeitspanne in der eine weitere Verarbeitung noch möglich ist) und die Viskosität bestimmt. Die Herstellung der Probenkörper erfolgte dabei wie oben ausgeführt. Die erhaltenen Messwerte sind in Tabelle 2 dargestellt. Es zeigt sich, dass bei Einsatz von klebrigmachenden Harzen mit einer Einweichungstemperatur unter 100°C eine verbesserte offene Zeit erzielt wird.

Tabelle 2

|  | Grundrezeptur + Vestoplast 206 V (Kontrolle) | Grundrezeptur + Vestoplast 206 V + Wingtack 95 | Grundrezeptur + Vestoplast 206 V + Escorez 1401 |
|---|---|---|---|
| Offene Zeit (500 $\mu$m, 200°C) | 50 s | 70 s | 60 s |
| Viskosität bei 180°C, 10 UpM | 8.900 mPa·s | 8.400 mPa·s | 9.200 mPa·s |

Zur Bestimmung der offenen Zeit wurde wie folgt vorgegangen: Die jeweilige Schmelzklebstoffzusammensetzung wurde während 30 min bei einer Temperatur von 200°C in einem Ofen vorgewärmt. Zugleich wurden eine Rakel (500 $\mu$m) sowie ein mit Silikon beschichtetes Papier (Sicol, B700, 10 cm Breite, Laufenberg & Sohn KG) auf einer Heizplatte bei 200°C vorgewärmt. Jeweils 20 g der Schmelzklebstoffzusammensetzung wurde sodann auf der Heizplatte bei der Temperatur von 200°C mit der Rakel in einer Dicke von 500 $\mu$m auf das beschichtete Papier aufgezogen. Dieser Prüfkörper wurde anschliessend auf einen raumtemperaturwarmen Untergrund gelegt. In regelmässigen Abständen wurde ein kurzer Streifen Papier auf den Prüfkörper gedrückt (leichter Fingerdruck) und langsam wieder entfernt. Dieses Vorgehen wurde solange wiederholt, bis das Bruchverhalten von kohäsiv zu adhäsiv wechselte. Dieser Zeitpunkt wird als offene Zeit bezeichnet.

Für die Messung der Viskosität wurde die jeweilige Schmelzklebstoffzusammensetzung in einem geschlossenen Behälter während 20 Minuten vorgewärmt. Daraufhin wurde eine Probe der Schmelzklebstoffzusammensetzung im Viskosimeter (Brookfield Thermosel) während 20 Minuten auf eine Temperatur von 180°C temperiert. Anschliessend wurde die Viskositätsmessung gestartet und der sich nach 5 Minuten bei 10 Umdrehungen pro Minute einstellende Viskositätswert ermittelt.

**Patentansprüche**

1. Schmelzklebstoffzusammensetzung umfassend

   (a) 40 bis 65 Gew.-% an mindestens einem thermoplastischen, bei 25 °C festen Silangruppen enthaltenden Poly-α-olefin,
   (b) mindestens ein bei 25 °C festes thermoplastisches Poly-α-olefin ohne Silangruppen und
   (c) mindestens ein bei 25°C klebrigmachendes Harz mit einen Schmelz- oder Erweichungspunkt, bestimmt mit der Ring & Kugel Methode, von 60 bis 100°C,

   wobei das Produkt des Gehalts der Komponente (a), bezogen auf das Gesamtgewicht der Schmelzklebstoffzusammensetzung, und ihres Pfropfungsgrads ≤ 0,025 ist, wobei der Pfropfungsgrad bestimmt wird als Pfropfungsgrad = Menge Pfropfauflage/Menge Pfropfgrundlage.

2. Schmelzklebstoffzusammensetzung gemäß Anspruch 1, **dadurch gekennzeichnet, dass** das bei 25°C feste Silangruppen enthaltende Poly-α-olefin eine Erweichungstemperatur von 70 bis 150°C, insbesondere von 80 bis 120°C, und besonders bevorzugt von 90 bis 110°C, aufweist.

3. Schmelzklebstoffzusammensetzung gemäß Anspruch 1 oder 2, **dadurch gekennzeichnet, dass** das bei 25°C feste Silangruppen enthaltende Poly-α-olefin ein silangepfropftes Poly-α-olefin, vorzugsweise ein silangepfropftes Polyethylen oder Polypropylen, ist.

**4.** Schmelzklebstoffzusammensetzung gemäß einem der vorhergehenden Ansprüche, **dadurch gekennzeichnet, dass** das bei 25°C feste Silangruppen enthaltende Poly-$\alpha$-olefin ein mit Hilfe des Ziegler-Natta-Verfahrens hergestelltes Poly-$\alpha$-olefin ist, auf welches Silangruppen aufgepfropft wurden.

**5.** Schmelzklebstoffzusammensetzung gemäß einem der vorhergehenden Ansprüche, **dadurch gekennzeichnet, dass** das Produkt des Gehalts der Komponente (a) und ihres Pfropfungsgrads $\leq 0,02$ ist.

**6.** Schmelzklebstoffzusammensetzung gemäß einem der vorhergehenden Ansprüche, **dadurch gekennzeichnet, dass** das bei 25 °C feste thermoplastische Poly-$\alpha$-olefin ohne Silangruppen ein ataktisches Poly-$\alpha$-olefin ohne Silangruppen umfasst.

**7.** Schmelzklebstoffzusammensetzung gemäß einem der vorhergehenden Ansprüche, **dadurch gekennzeichnet, dass** das klebrig machende Harz einen Schmelzpunkt oder Erweichungspunkt von 80 bis 100°C aufweist.

**8.** Schmelzklebstoffzusammensetzung gemäß einem der vorhergehenden Ansprüche, **dadurch gekennzeichnet, dass** das klebrigmachende Harz ein Kohlenwasserstoffharz, insbesondere ein aliphatisches $C_5$-$C_9$-Kohlenwasserstoffharz, ist.

**9.** Schmelzklebstoffzusammensetzung gemäß einem der vorhergehenden Ansprüche, **dadurch gekennzeichnet, dass** die Menge an klebrigmachendem Harz 1 bis 20 Gew.-%, insbesondere 5 bis 15 Gew.-%, bezogen auf die Schmelzklebstoffzusammensetzung, beträgt.

**10.** Schmelzklebstoffzusammensetzung gemäß einem der vorhergehenden Ansprüche, **dadurch gekennzeichnet, dass** das Gewichtsverhältnis aller klebrigmachenden Harze zu allen bei 25°C festen Silangruppen enthaltenden Poly-$\alpha$-olefinen kleiner als 0,5 ist, bevorzugt zwischen 0,10 und 0,35 und am meisten bevorzugt zwischen 0,12 und 0,2 liegt.

**11.** Verwendung einer Schmelzklebstoffzusammensetzung gemäß einem der Ansprüche 1 bis 10 zum Verkleben von Folien, insbesondere Polyolefinfolien, Schäumen oder Textilien, insbesondere als Kaschierklebstoff.

**12.** Verbundkörper (1), umfassend

    - ein erstes Substrat (S1), welches Glas, Kunststoff, Holz, eine Folie, ein Schaumstoff oder ein Textil, bevorzugt ein Kunststoff, umfasst,
    - eine Schmelzklebstoffzusammensetzung gemäß einem der Ansprüche 1 bis 10 oder eine aus dieser erhältliche vernetzte Schmelzklebstoffzusammensetzung sowie
    - ein zweites Substrat (S2),

wobei die Schmelzklebstoffzusammensetzung oder die vernetzte Schmelzklebstoffzusammensetzung zwischen dem ersten Substrat (S1) und dem zweiten Substrat (S2) angeordnet ist.

**13.** Verfahren zur Herstellung eines Verbundkörpers gemäß Anspruch 12, umfassend die Schritte:

    (i) Aufschmelzen einer Schmelzklebstoffzusammensetzung gemäß einem der Ansprüche 1 bis 10,
    (ii) Applizieren der geschmolzenen Schmelzklebstoffzusammensetzung auf ein erstes Substrat (S1), welches Glas, Kunststoff, Holz, eine Folie, ein Schaumstoff oder ein Textil, bevorzugt einen Kunststoff, umfasst,
    (iii) gegebenenfalls Erwärmen des ersten Substrats (S1) und
    (iv) Kontaktieren des zweiten Substrats (S2) mit der aufgeschmolzenen Schmelzklebstoffzusammensetzung.

**Claims**

**1.** A hot-melt adhesive composition comprising

    (a) from 40 to 65% by weight of at least one thermoplastic, silane group-containing poly-$\alpha$-olefin that is solid at 25°C,
    (b) at least one thermoplastic poly-$\alpha$-olefin without silane groups that is solid at 25°C and
    (c) at least one resin that is tackifying at 25°C and has a melting or softening point as determined by the ring & bell method of from 60 to 100°C,

wherein the product of the content of component (a), with respect to the total weight of the hot-melt adhesive composition, and the degree of grafting thereof is ≤ 0.025, wherein the degree of grafting is defined as follows: degree of grafting = amount of graft/amount of grafting substrate.

2. The hot-melt adhesive composition according to claim 1, **characterized in that** the silane group-containing poly-$\alpha$-olefin that is solid at 25°C has a softening temperature of 70 to 150°C, especially of 80 to 120°C, and particularly preferably of 90 to 110°C.

3. The hot-melt adhesive composition according to claim 1 or 2, **characterized in that** the silane group-containing poly-$\alpha$-olefin that is solid at 25°C is a silane-grafted poly-$\alpha$-olefin, preferably a silane-grafted polyethylene or polypropylene.

4. The hot-melt adhesive composition according to one of the preceding claims, **characterized in that** the silane group-containing poly-$\alpha$-olefin that is solid at 25°C is a poly-$\alpha$-olefin produced by the Ziegler-Natta process, onto which silane groups were grafted.

5. The hot-melt adhesive composition according to one of the preceding claims, **characterized in that** the product of the content of component (a) and the degree of grafting thereof is ≤ 0.02.

6. The hot-melt adhesive composition according to one of the preceding claims, **characterized in that** the thermoplastic poly-$\alpha$-olefin without silane groups that is solid at 25°C comprises an atactic poly-$\alpha$-olefin without silane groups.

7. The hot-melt adhesive composition according to one of the preceding claims, **characterized in that** the tackifying resin has a melting point or softening point of 80 to 100°C.

8. The hot-melt adhesive composition according to one of the preceding claims, **characterized in that** the tackifying resin is a hydrocarbon resin, especially an aliphatic $C_5$-$C_9$-hydrocarbon resin.

9. The hot-melt adhesive composition according to one of the preceding claims, **characterized in that** the quantity of tackifying resin is 1 to 20 wt-%, especially 5 to 15 wt-%, relative to the hot-melt adhesive composition.

10. The hot-melt adhesive composition according to one of the preceding claims, **characterized in that** the weight ratio of all tackifying resins to all silane group-containing poly-$\alpha$-olefins that are solid at 25°C is less than 0.5, preferably between 0.10 und 0.35 and most preferably between 0.12 and 0.2.

11. Use of a hot-melt adhesive composition according to one of claims 1 to 10 for bonding films, especially polyolefin films, foams or textiles, especially as a laminating adhesive.

12. A composite (1), comprising

- a first substrate (S1), comprising glass, plastic, wood, a film, a foam or a textile, preferably a plastic,
- a hot-melt adhesive composition according to one of claims 1 to 10 or a cross-linked hot-melt adhesive composition obtainable therefrom and
- a second substrate (S2),

wherein the hot-melt adhesive composition or the cross-linked hot-melt adhesive composition is disposed between the first substrate (S1) and the second substrate (S2).

13. A method for producing a composite according to claim 12, comprising the steps of:

(i) melting a hot-melt adhesive composition according to one of claims 1 to 10,
(ii) applying the melted hot-melt adhesive composition to a first substrate (S1), which comprises glass, plastic, wood, a film, a foam or a textile, preferably a plastic,
(iii) optionally heating the first substrate (S1) and
(iv) contacting the second substrate (S2) with the melted hot-melt adhesive composition.

**Revendications**

1. Composition adhésive thermofusible comprenant :

   (a) 40 à 65 % en poids d'au moins une poly-α-oléfine thermoplastique solide à 25 °C contenant des groupes silane,
   (b) au moins une poly-α-oléfine thermoplastique solide à 25 °C sans groupes silane,
   (c) au moins une résine collante à 25 °C ayant un point de fusion ou de ramollissement, déterminé avec la méthode bille et anneau, de 60 à 100 °C,

   le produit de la teneur du composant (a), par rapport au poids total de la composition adhésive thermofusible, et de son degré de greffage étant ≤ 0,025, le degré de greffage étant déterminé par degré de greffage = quantité de charge de greffage/quantité de base de greffage.

2. Composition adhésive thermofusible selon la revendication 1, **caractérisée en ce que** la poly-α-oléfine solide à 25 °C contenant des groupes silane présente une température de ramollissement de 70 à 150 °C, notamment de 80 à 120 °C, et de manière particulièrement préférée de 90 à 110 °C.

3. Composition adhésive thermofusible selon la revendication 1 ou 2, **caractérisée en ce que** la poly-α-oléfine solide à 25 °C contenant des groupes silane est une poly-α-oléfine à greffage silane, de préférence un polyéthylène ou polypropylène à greffage silane.

4. Composition adhésive thermofusible selon l'une quelconque des revendications précédentes, **caractérisée en ce que** la poly-α-oléfine solide à 25 °C contenant des groupes silane est une poly-α-oléfine fabriquée à l'aide du procédé Ziegler-Natta, sur laquelle des groupes silane ont été greffés.

5. Composition adhésive thermofusible selon l'une quelconque des revendications précédentes, **caractérisée en ce que** le produit de la teneur du composant (a) et de son degré de greffage est ≤ 0,02.

6. Composition adhésive thermofusible selon l'une quelconque des revendications précédentes, **caractérisée en ce que** la poly-α-oléfine thermoplastique solide à 25 °C sans groupes silane comprend une poly-α-oléfine atactique sans groupes silane.

7. Composition adhésive thermofusible selon l'une quelconque des revendications précédentes, **caractérisée en ce que** la résine collante présente un point de fusion ou un point de ramollissement de 80 à 100 °C.

8. Composition adhésive thermofusible selon l'une quelconque des revendications précédentes, **caractérisée en ce que** la résine collante est une résine hydrocarbonée, notamment une résine hydrocarbonée en $C_5$-$C_9$ aliphatique.

9. Composition adhésive thermofusible selon l'une quelconque des revendications précédentes, **caractérisée en ce que** la quantité de résine collante est de 1 à 20 % en poids, notamment de 5 à 15 % en poids, par rapport à la composition adhésive thermofusible.

10. Composition adhésive thermofusible selon l'une quelconque des revendications précédentes, **caractérisée en ce que** le rapport en poids entre toutes les résines collantes et toutes les poly-α-oléfines solides à 25 °C contenant des groupes silane est inférieur à 0,5, de préférence compris entre 0,10 et 0,35, et de manière préférée entre toutes compris entre 0,12 et 0,2.

11. Utilisation d'une composition adhésive thermofusible selon l'une quelconque des revendications 1 à 10 pour le collage de films, notamment de films de polyoléfine, de mousses ou de textiles, notamment en tant qu'adhésif de stratification.

12. Corps composite (1), comprenant :

   - un premier substrat (S1), qui comprend du verre, du plastique, du bois, un film, une mousse ou un textile, de préférence un plastique,
   - une composition adhésive thermofusible selon l'une quelconque des revendications 1 à 10 ou une composition adhésive thermofusible réticulée pouvant être obtenue à partir de celle-ci, ainsi que

- un deuxième substrat (S2),

la composition adhésive thermofusible ou la composition adhésive thermofusible réticulée étant agencée entre le premier substrat (S1) et le deuxième substrat (S2).

13. Procédé de fabrication d'un corps composite selon la revendication 12, comprenant les étapes suivantes :

(i) la fusion d'une composition adhésive thermofusible selon l'une quelconque des revendications 1 à 10,
(ii) l'application de la composition adhésive thermofusible fondue sur un premier substrat (S1), qui comprend du verre, du plastique, du bois, un film, une mousse ou un textile, de préférence un plastique,
(iii) éventuellement le chauffage du premier substrat (S1) et
(iv) la mise en contact du deuxième substrat (S2) avec la composition adhésive thermofusible fondue.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5994474 A
- DE 4000695 A1
- EP 2075297 A1
- WO 2009133093 A
- WO 2011023768 A
- WO 2011109605 A1
- WO 2006131417 A1
- WO 2006102957 A2
- WO 03070851 A1
- DE 102008041281 A1
- EP 0827994 A2
- EP 2336261 A1